# EUROPEAN PATENT APPLICATION

(11) **EP 4 851 442 A1**
(43) Date of publication of application: **09.12.2026**
(21) Application number: 26183680.3
(22) Date of filing: 08.06.2026
(51) Int. Cl.: F02C 7/20, B64D 27/12, B64D 27/18, B64D 27/40

(54) **GAS TURBINE ENGINE AIRCRAFT MOUNTING SYSTEM**

(30) Priority: 06.06.2025 US 202519231004
(71) Applicant: RTX Corporation, Farmington, CT 06032 (US)
(72) Inventor: BREAULT, Andrew E., Bolton, 06043 (US); YAZICI, Murat, Glastonbury, 06033 (US)
(74) Representative: Dehns

(57) **Abstract**

An aircraft system is provided that includes a pylon (26), a gas turbine engine (28), a first mounting linkage (60), and a second mounting linkage (60). The gas turbine engine (28) comprises a fan section (36) having a fan case (58) and a turbine exhaust case, TEC (48). The fan case (58) defines a portion of a bypass air path (54) and includes a linkage cavity (72, 74, 76) that extends radially inward. The first mounting linkage (60) is engaged with the fan case (58) and the pylon (26). The linkage cavity (72, 74, 76) is configured to receive a portion of the first mounting linkage (60). The second mounting linkage (60) is engaged with the TEC (48) and the pylon (26).

## Description

### BACKGROUND OF THE INVENTION

### 1. Technical Field

The present invention relates to aircraft in general and to mounting systems for an aircraft propulsion system in particular.

### 2. Background Information

Various propulsion systems may be used to power an aircraft. Each of these propulsion systems must be attached to the aircraft in some manner. Very often, a propulsion system may include a gas turbine engine that is housed within a nacelle. The nacelle and the gas turbine engine may be attached to the wing of an aircraft via a pylon. While propulsion system mounting systems are known, there is still room in the art for improvement.

### SUMMARY

According to an aspect of the present invention, an aircraft system is provided that includes a pylon, a gas turbine engine, a first mounting linkage, and a second mounting linkage. The gas turbine engine comprises a fan section having a fan case and a turbine exhaust case (TEC). The fan case defines a portion of a bypass air path and includes a linkage cavity that extends radially inward. The first mounting linkage is engaged with the fan case and the pylon. The linkage cavity is configured to receive a portion of the first mounting linkage. The second mounting linkage is engaged with the TEC and the pylon.

Optionally, and in accordance with the above, the first mounting linkage may be configured to accommodate a first gravitational loading, a first lateral loading, and a first torque loading.

Optionally, and in accordance with any of the above, the second mounting linkage may be configured to accommodate a second gravitational loading and a second lateral loading.

Optionally, and in accordance with any of the above, the second mounting linkage may not be configured to accommodate torque resulting from an operation of the gas turbine engine.

Optionally, and in accordance with any of the above, the first mounting linkage (FML) may include a FML central link, a FML first lateral link, and a FML second lateral link. The FML first lateral link may be attached to the FML central link and to the fan case, and the FML second lateral link may be attached to the FML central link and to the fan case, and the FML central link may be attached to the fan case.

Optionally, and in accordance with any of the above, the linkage cavity may include a first cavity and a second cavity. The first cavity may extend radially inward from an outer perimeter of the fan case and may be configured to receive a portion of the FML first lateral link. The second cavity may extend radially inward from the outer perimeter of the fan case and may be configured to receive a portion of the FML second lateral link.

Optionally, and in accordance with any of the above, the fan case may include a central link flange and the FML central link may be configured to engage with the central link flange for attachment of the FML central link to the fan case.

Optionally, and in accordance with any of the above, the linkage cavity may include a center cavity that extends radially inward from the outer perimeter of the fan case and may be configured to receive a portion of the FML central link.

Optionally, and in accordance with any of the above, the FML first lateral link may be pivotally attached to the FML central link and may be pivotally attached to the fan case. The FML second lateral link may be non-rotationally attached to the central link and may be pivotally attached to the fan case.

Optionally, and in accordance with any of the above, the FML second lateral link may include a first mounting aperture disposed at a first end of the FML second lateral link, a second mounting aperture disposed at a second end of the FML second lateral link, and a third mounting aperture. The first mounting aperture, the second mounting aperture, and the third mounting aperture may be arranged such that an included obtuse angle is disposed between a first line and a second line. The first line may intersect a center of the first mounting aperture and a center of the third mounting aperture, and the second line may intersect a center of the second mounting aperture and the center of the third mounting aperture.

Optionally, and in accordance with any of the above, the FML second lateral link may include a first mounting aperture disposed at a first end of the FML second lateral link, a second mounting aperture disposed at a second end of the FML second lateral link, and a third mounting aperture. The first mounting aperture, the second mounting aperture, and the third mounting aperture may be arranged such that an included acute angle is disposed between a first line and a second line. The first line may intersect a center of the first mounting aperture and a center of the third mounting aperture, and the second line may intersect a center of the second mounting aperture and the center of the third mounting aperture.

Optionally, and in accordance with any of the above, the second mounting linkage (SML) may include a SML central link, a SML first lateral link, and a SML second lateral link. The SML first lateral link may be attached to the SML central link and to the TEC, and the SML second lateral link may be attached to the SML central link and to the TEC.

Optionally, and in accordance with any of the above, the SML first lateral link may be pivotally attached to the SML central link and pivotally attached to the TEC, and the SML second lateral link may be pivotally attached to the SML central link and pivotally attached to the TEC.

According to another aspect of the present invention, an aircraft is provided that includes a pylon, a gas turbine engine, a first mounting linkage, and a second mounting linkage. The gas turbine engine comprises a fan section, a fan case, a compressor section, a combustor, a turbine section, and a turbine exhaust case (TEC). The fan case is disposed radially outside of the fan section and defines a portion of a bypass air path. The fan case includes a linkage cavity that extends radially inward. The first mounting linkage is engaged with the fan case and the pylon. The linkage cavity is configured to receive a portion of the first mounting linkage. The second mounting linkage is engaged with the TEC and the pylon.

Optionally, and in accordance with the above, the first mounting linkage may be configured to accommodate a first gravitational loading, a first lateral loading, and a first torque loading.

Optionally, and in accordance with any of the above, the second mounting linkage may be configured to accommodate a second gravitational loading and a second lateral loading.

Optionally, and in accordance with any of the above, the second mounting linkage may not be configured to accommodate torque resulting from an operation of the gas turbine engine.

Optionally, and in accordance with any of the above, the first mounting linkage (FML) may include a FML central link, a FML first lateral link, and a FML second lateral link. The FML first lateral link may be attached to the FML central link and to the fan case, and the FML second lateral link may be attached to the FML central link and to the fan case, and the FML central link may be attached to the fan case.

Optionally, and in accordance with any of the above, the linkage cavity may include a first cavity and a second cavity. The first cavity may extend radially inward from an outer perimeter of the fan case and may be configured to receive a portion of the FML first lateral link. The second cavity may extend radially inward from the outer perimeter of the fan case and may be configured to receive a portion of the FML second lateral link.

Optionally, and in accordance with any of the above, the fan case may include a central link flange and the FML central link may be configured to engage with the central link flange for attachment of the FML central link to the fan case.

Optionally, and in accordance with any of the above, the linkage cavity may include a center cavity that extends radially inward from the outer perimeter of the fan case and may be configured to receive a portion of the FML central link.

Optionally, and in accordance with any of the above, the FML first lateral link may be pivotally attached to the FML central link and may be pivotally attached to the fan case. The FML second lateral link may be non-rotationally attached to the central link and may be pivotally attached to the fan case.

Optionally, and in accordance with any of the above, the FML second lateral link may include a first mounting aperture disposed at a first end of the FML second lateral link, a second mounting aperture disposed at a second end of the FML second lateral link, and a third mounting aperture. The first mounting aperture, the second mounting aperture, and the third mounting aperture may be arranged such that an included obtuse angle is disposed between a first line and a second line. The first line may intersect a center of the first mounting aperture and a center of the third mounting aperture, and the second line may intersect a center of the second mounting aperture and the center of the third mounting aperture.

Optionally, and in accordance with any of the above, the FML second lateral link may include a first mounting aperture disposed at a first end of the FML second lateral link, a second mounting aperture disposed at a second end of the FML second lateral link, and a third mounting aperture. The first mounting aperture, the second mounting aperture, and the third mounting aperture may be arranged such that an included acute angle is disposed between a first line and a second line. The first line may intersect a center of the first mounting aperture and a center of the third mounting aperture, and the second line may intersect a center of the second mounting aperture and the center of the third mounting aperture.

Optionally, and in accordance with any of the above, the second mounting linkage (SML) may include a SML central link, a SML first lateral link, and a SML second lateral link. The SML first lateral link may be attached to the SML central link and to the TEC, and the SML second lateral link may be attached to the SML central link and to the TEC.

Optionally, and in accordance with any of the above, the SML first lateral link may be pivotally attached to the SML central link and pivotally attached to the TEC, and the SML second lateral link may be pivotally attached to the SML central link and pivotally attached to the TEC.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic frontal view of an aircraft.
FIG. 2 is a diagrammatic sectional view of a gas turbine engine embodiment.
FIG. 3 is a diagrammatic view of a gas turbine engine mounted on an aircraft pylon.
FIG. 4 is a diagrammatic view of a gas turbine engine mounted on an aircraft pylon according to an embodiment of the present invention.
FIG. 5 is a diagrammatic representation of a present invention mounting linkage embodiment.
FIG. 5A is the mounting linkage embodiment shown in FIG. 5, with load indications.
FIG. 6 is a diagrammatic representation of another present invention mounting linkage embodiment.
FIG. 6A is the mounting linkage embodiment shown in FIG. 6, with load indications.
FIG. 7 is a diagrammatic representation of yet another present invention mounting linkage embodiment.
FIG. 8 is a diagrammatic representation of a present invention mounting linkage embodiment mounted on a pylon and an engine case.
FIG. 8A is a diagrammatic representation of the fan case engaging with the linkage as shown in FIG. 8.
FIG. 9 is a diagrammatic representation of a present invention mounting linkage embodiment mounted on a pylon and an engine case.
FIG. 10 is a diagrammatic representation of a present invention mounting linkage embodiment mounted on a pylon and an engine case.
FIG. 10A is a diagrammatic representation of the fan case engaging with the linkage as shown in FIG. 10.
FIG. 11A is a diagrammatic representation of a mounting linkage embodiment that is disposed completely externally to the engine case.
FIG. 11B is a diagrammatic representation of a present invention mounting linkage embodiment and engine case that are configured to produce a decreased mount height.
FIG. 12 is a diagrammatic representation of an embodiment of a mounting linkage attached to a pylon.
FIG. 13 is a diagrammatic representation of another embodiment of a mounting linkage attached to a pylon.
FIG. 14 diagrammatically illustrates guide vanes or load carrying struts used to structurally support a present invention mounting linkage embodiment.

### DETAILED DESCRIPTION

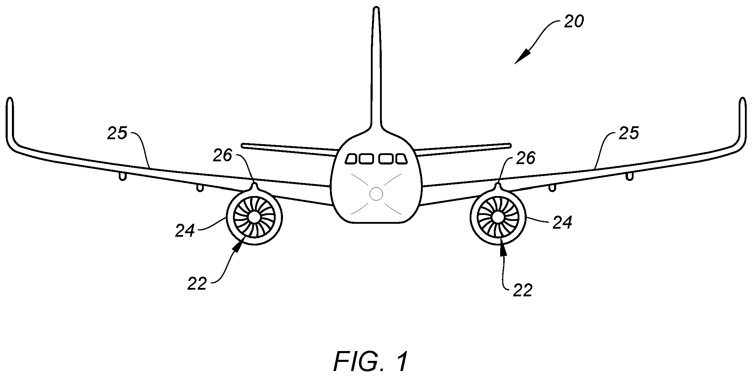

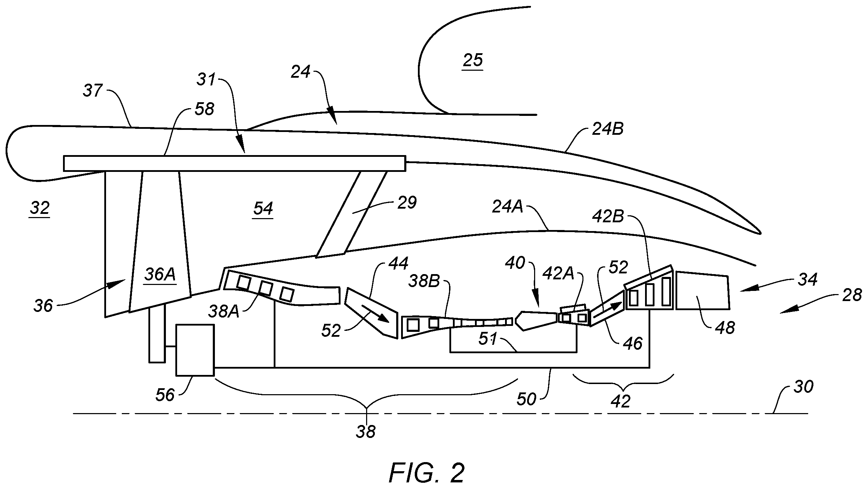

FIG. 1 illustrates an aircraft 20 having a pair of propulsion systems 22, each mounted in a nacelle 24 connected to a respective wing 25 by a pylon 26. The propulsion system 22 may include a gas turbine engine (see FIG. 2), a hybrid electric propulsion (HEP) system, or the like.

FIG. 2 shows a diagrammatic view of a gas turbine engine 28 disposed within a nacelle 24. The nacelle includes an inner nacelle structure 24A and an outer nacelle structure 24B. In some embodiments, a fan exit guide vane ("FEGV 29") may extend between an inner wall structure of the inner nacelle structure 24A and an engine outer case structure 31 that includes a fan case 58. The FEGV 29 extends across a fan bypass air path 54.

The gas turbine engine 28 extends along an axial centerline 30 between an upstream airflow inlet 32 and a downstream exhaust 34. The gas turbine engine 28 includes a fan section 36, a compressor section 38, a combustion section 40, and a turbine section 42. The fan section 36 includes a plurality of fan blades 36A that collectively define an outer radial fan diameter. The fan case 58 is disposed radially outboard of, extends axially along and may circumscribe the fan section 36 and its plurality of fan blades 36A. The fan case 58 may thereby house and may be configured as a containment structure for the fan section 36 and its plurality of fan blades 36A. The fan cowl 37, and more generally, the outer nacelle structure 24B is configured to provide an aerodynamic cover over the fan case 58. The compressor section 38 includes a low-pressure compressor (LPC 38A) and a high-pressure compressor (HPC 38B). The turbine section 42 includes a high-pressure turbine (HPT 42A) and a low-pressure turbine (LPT 42B). The engine sections are arranged sequentially along the centerline 30 within an engine housing; e.g., the LPC 38A, an intermediate case 44, the HPC 38B, the combustion section 40, the HPT 42A, the mid-turbine frame 46, the LPT 42B, and the turbine exhaust case (TEC 48) and form the core of the engine 28. The LPC 38A is connected to and driven by the LPT 42B through a low-speed shaft 50. The HPC 38B is connected to and driven by the HPT 42A through a high-speed shaft 51.

In the gas turbine embodiment shown in FIG. 2, a fan drive gear system ("FDGS 56") is diagrammatically shown in communication with the low-speed shaft 50 and with the fan section 36. The FDGS 56 may be configured to accept a rotational drive input (e.g., from the low-speed shaft 50) at a given rotational speed (RS_{INPUT}) and torque (T_{INPUT}) and a produce an output rotational drive at a given rotational speed (RS_{OUTPUT}) and torque (T_{OUTPUT}) for the fan section. The present invention does not require an FDGS 56. In those engine embodiments that include an FDGS 56, the present invention is not limited to any particular FDGS configuration.

Air entering the gas turbine engine 28 through the airflow inlet 32 (forward of the fan section 36) is bisected between a core gas path 52 and a fan bypass air path 54. A portion of the air entering the gas turbine engine 28 passes through the fan section 36 and enters the core gas path 52. The core gas path 52 extends through the LPC 38A, the intermediate case 44, the HPC 38B, the combustion section 40, the HPT 42A, the mid-turbine frame 46, the LPT 42B, and the TEC 48. Core gas exiting the LPT 42B exits the engine 28 via the exhaust 34. The remainder of the air entering the gas turbine engine 28 passes through the fan section 36 and enters the fan bypass air path 54 which is disposed radially outside of the core of the engine 28.

The gas turbine engine 28 configuration diagrammatically shown in FIG. 2 is an example provided to facilitate the description herein. The present invention may be implemented in a variety of different gas turbine engine 28 configurations and is not therefore limited to the gas turbine engine 28 configuration diagrammatically shown in FIG. 2.

The terms "forward" and "aft" are used herein to indicate the relative position of a component or surface. In a conventional axial engine 28 such as that shown in FIG. 2, the fan section 36 is forward of the compressor section 38 and the turbine section 42 is aft of the compressor section 38. The terms "inner radial" and "outer radial" refer to relative radial positions from the engine centerline 30. An inner radial component or path is disposed radially closer to the engine centerline 30 than an outer radial component or path.

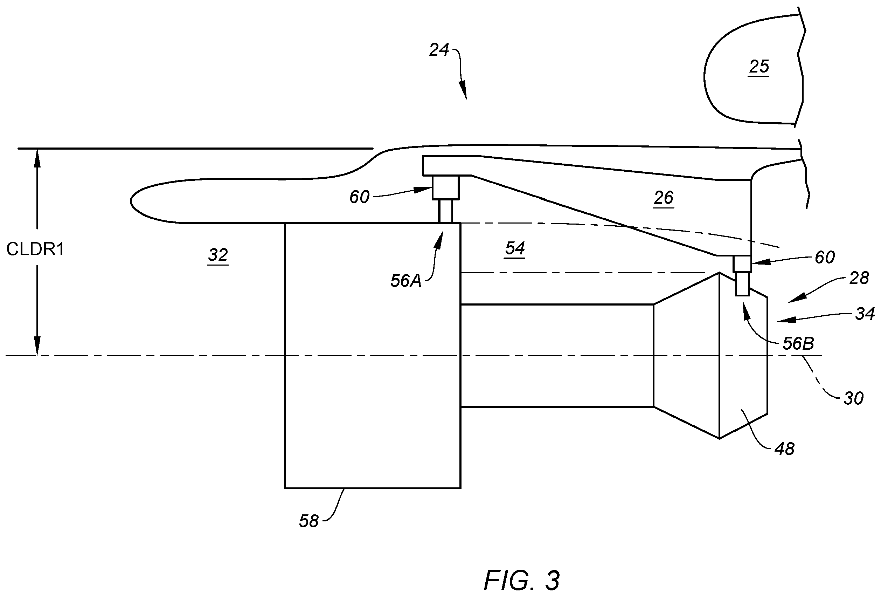

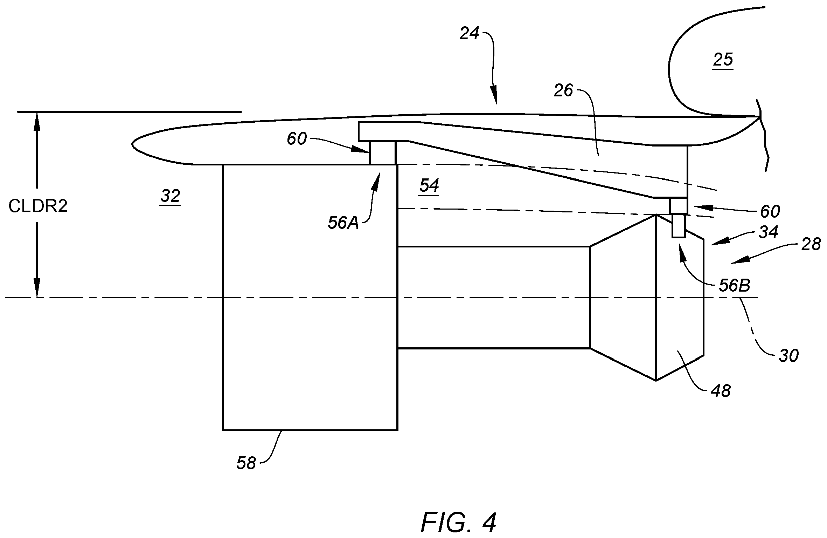

Referring to FIGS. 3 and 4, the gas turbine engine 28 is housed within a nacelle 24, and both the gas turbine engine 28 and the nacelle 24 are structurally connected to a wing 25 of the aircraft 20 (see FIG. 1) by a mounting linkage 60 and a pylon 26. The gas turbine engine 28 is typically connected to the pylon 26 via mounting linkages 60 at a forward mount position 56A and at an aft mount position 56B. The forward mount position 56A may be located at a fan case 58 surrounding the fan section 36 of the engine 28, or at an intermediate case 44 (e.g., see FIG. 2) of the engine 28. The intermediate case 44 is disposed in the compressor section 38 of the gas turbine engine 28; e.g., between the LPC 38A and the HPC 38B. The present invention is directed to embodiments wherein the forward mount position 56A of the gas turbine engine 28 is at the fan case 58. The aft mount position 58B is at the TEC 48. As will be detailed herein, embodiments of the present invention make it possible to decrease the spacing between the pylon 26 and the engine fan case 58 or TEC 48 and consequently reduce the crestline of the nacelle 24 and the pylon 26. FIG. 3 diagrammatically illustrates a forward mounting linkage 60 disposed outside of the fan case 58 and the distance ("CLRD1") between the engine centerline 30 and the nacelle 24 at the crestline. FIG. 4 diagrammatically illustrates a forward mounting linkage 60 embodiment according to a present invention embodiment and the distance ("CLRD2") between the engine centerline 30 and the nacelle 24 at the crestline which is less than CLRD1.

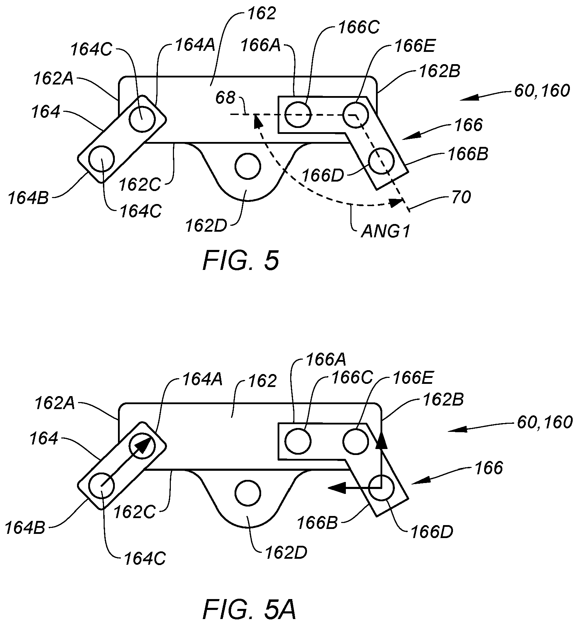

FIG. 5 diagrammatically illustrates a mounting linkage 160 embodiment that may be used to connect the gas turbine engine 28 to the pylon 26 (e.g., see FIG. 4) at the forward mount position 56A (e.g., at the fan case 58) and/or at the aft mount position 56B (e.g., at the TEC 48). The mounting linkage 160 includes a central link 162, a first lateral link 164, and a second lateral link 166. The central link 162 includes a first axial end 162A, a second axial end 162B, an inner radial side 162C, and a failsafe attachment flange 162D. The failsafe attachment flange 162D extends outwardly from the inner radial side 162C and is configured to receive a failsafe pin. The first lateral link 164 extends between a first end 164A and a second end 164B. Mounting apertures 164C are disposed at the first and second ends 164A, 164B. In the embodiment diagrammatically shown in FIG. 5, the first lateral link 164 has a linear configuration between the first and second ends 164A, 164B. The first end 164A of the first lateral link is pivotally attached to the central link 162 adjacent the first axial end 162A of the central link 162; e.g., via a fastener. The second end 164B of the first lateral link 164 extends outwardly; e.g., when the mounting linkage 160 is attached to the engine 28, the first lateral link 164 is oriented in a substantially tangential orientation relative to the engine centerline 30. The second lateral link 166 has an angled configuration that extends between a first end 166A and a second end 166B. The body of the second lateral link 166 has an obtuse angle ("ANG1") included between the portion of the second lateral link 166 that includes the first end 166A and the portion of the second lateral link 166 that includes the second end 166B. The second lateral link 166 includes a first mounting aperture 166C disposed at the first end 166A, a second mounting aperture 166D disposed at the second end 166B, and a third mounting aperture 166E disposed generally between the first and second mounting apertures 166C, 166D. The obtuse angle ("ANG1") may be defined as the included angle disposed between a first line 68 that extends through the centers of the first and third mounting apertures 166C, 166E, and a second line 70 that extends through the centers of the second and third mounting apertures 166D, 166E. The second lateral link 166 is non-rotationally fixed to the central link 162 by fasteners at the first and third mounting apertures 166C, 166E. The second end 166B of the second lateral link 166 extends outwardly; e.g., when the mounting linkage 60 is attached to the engine 28, the second end portion 166B of the second lateral link 166 is oriented in a substantially tangential orientation relative to the engine centerline 30.

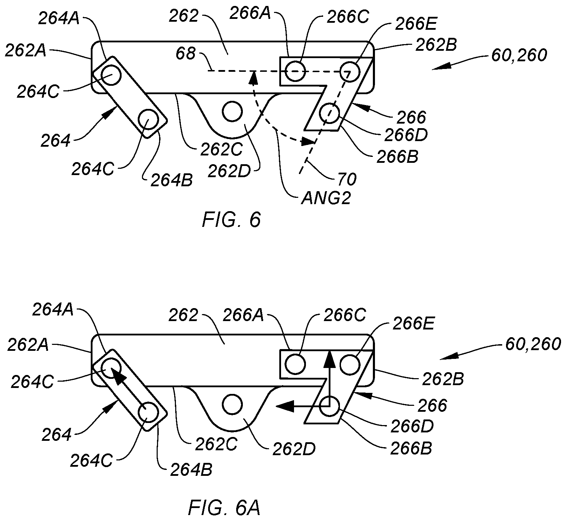

FIG. 6 diagrammatically illustrates a mounting linkage 260 embodiment that may be used to connect the gas turbine engine 28 to the pylon 26 (e.g., see FIG. 4) at the forward mount position 56A (e.g., at the fan case 58) and/or at the aft mount position 56B (e.g., at the TEC 48). The mounting linkage 260 includes a central link 262, a first lateral link 264, and a second lateral link 266. The central link 262 includes a first axial end 262A, a second axial end 262B, an inner radial side 262C, and a failsafe attachment flange 262D. The failsafe attachment flange 262D extends outwardly from the inner radial side 262C and is configured to receive a failsafe pin. The first lateral link 264 extends between a first end 264A and a second end 264B. Mounting apertures 264C are disposed at the first and second ends 264A, 264B. In this embodiment, the second end 264B of the first lateral link 264 extends inwardly; e.g., when the mounting linkage 260 is attached to the engine 28, the first lateral link 264 is oriented in a direction generally toward the engine centerline 30. In this embodiment, the second lateral link 266 also has an angled configuration that extends between a first end 266A and a second end 266B. In this embodiment, an acute angle ("ANG2") is included between the portion of the second lateral link 266 that includes the first end 266A and the portion of the second lateral link 266 that includes the second end 266B. Like the embodiment shown in FIG. 5, the second lateral link 266 includes a first mounting aperture 266C disposed at the first end 266A, a second mounting aperture 266D disposed at the second end 266B, and a third mounting aperture 266E disposed generally between the first and second mounting apertures 266C, 266D. The portion of the second lateral link 266 that includes the first and third mounting apertures 266C, 266E is fixed to the central link 262 by fasteners. The portion of the second lateral link 266 that includes the second mounting aperture 266D extends inwardly; e.g., when the mounting linkage 260 is attached to the engine 28, the portion of the second lateral link 266 that includes the second mounting aperture 266D is oriented in a direction generally toward the engine centerline 30.

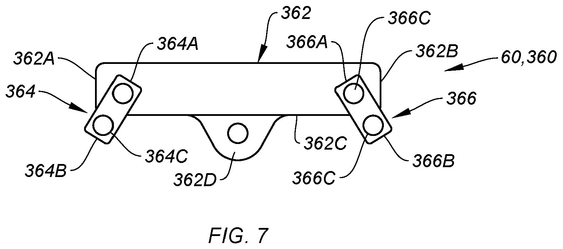

FIG. 7 diagrammatically illustrates a mounting linkage 360 embodiment that may be used to connect the gas turbine engine 28 to the pylon 26 at the aft mount position 56B (e.g., at the TEC 48) or the forward mount position 56A (e.g., at the fan case 58); see FIG. 4. The mounting linkage 360 includes a central link 362, a first lateral link 364, and a second lateral link 366. The central link 362 includes a first axial end 362A, a second axial end 362B, an inner radial side 362C, and a failsafe attachment flange 362D. The failsafe attachment flange 362D extends outwardly from the inner radial side 362C and is configured to receive a failsafe pin. The first lateral link 364 extends between a first end 364A and a second end 364B. Mounting apertures 364C are disposed at the first and second ends 364A, 364B. In this embodiment, the second end 364B of the first lateral link 364 extends outwardly; i.e., the first lateral link 364 in this embodiment is oriented like the first lateral link 164 shown in FIG. 5 and described herein. In this embodiment, the second lateral link 366 is configured like the first lateral link 364; e.g., having a linear configuration that extends between a first end 366A and a second end 366B with mounting apertures 366C disposed at the first and second ends 366A, 366B. The first end 366A of the second lateral link 366 is pivotally attached to the central link 362 adjacent the second axial end 362B of the central link 362; e.g., via a fastener. The second end 366B of the second lateral link 366 extends outwardly; e.g., when the mounting linkage 360 is attached to the engine 28, the second lateral link 366 is oriented in a substantially tangential orientation relative to the engine centerline 30.

The configuration of the first lateral links 164, 264 in the mounting linkage 160, 260 embodiments shown in FIGS. 5 and 6 allows for vertical (i.e., gravitational) and lateral loads (e.g., see FIGS. 5A and 6A) to be accommodated by the first lateral link 164, 264. The term "accommodate" as used herein refers to the mounting linkage 60 being designed in anticipation of a particular loading and therefore possessing the mechanical strength to withstand the particular loading without mechanical deficit such as but not limited to failure. The configuration of the second lateral links 166, 266 in the mounting linkage 160, 260 embodiments shown in FIGS. 5 and 6 allow for vertical, lateral, and torque loads (e.g., see FIGS. 5A and 6A) to be accommodated by the second lateral link 166, 266. Hence, the mounting linkage 160, 260 embodiments shown in FIGS. 5 and 6 collectively can accommodate vertical, lateral, and torque loads that may occur during operation of the engine 28. The term "torque load" is used to refer to a torque that is created during the operation of the engine 28. The configurations of the first and second lateral links 364, 366 in the mounting linkage 360 embodiment shown in FIG. 7 only allow for vertical (i.e., gravitational) and lateral loads and do not appreciably accommodate torque loads.

In some embodiments of the present invention, the mounting linkage 60 (e.g., See FIG. 4) disposed at the forward mount position 56A (i.e., at the fan case 58) may be configured to accommodate vertical, lateral, and torque loads that may occur during operation of the engine 28. For example, the mounting linkage 160, 260 disposed at the forward mount position 56A may be configured like the central link 162, 262, the first lateral link 164, 264, and the second lateral link 166, 266 embodiments shown in FIGS. 5 and 6. In these embodiments, the mounting linkage 60 disposed at the aft mount position 56B (i.e., at the TEC 48) may be configured to accommodate vertical and lateral loads that may occur during operation of the engine 28; e.g., a mounting linkage 360 configuration like that diagrammatically shown in FIG. 7.

In some embodiments of the present invention, the mounting linkage 60 (see FIG. 4) disposed at the forward mount position 56A (i.e., at the fan case 58) may be configured to accommodate vertical and lateral loads that may occur during operation of the engine 28. For example, the mounting linkage 60 disposed at the forward mount position 56A may be configured like the central link 362, the first lateral link 364, and the second lateral link 366 embodiments shown in FIG. 7. In these embodiments, the mounting linkage 60 disposed at the aft mount position 56B (i.e., at the TEC 48) may be configured to accommodate vertical, lateral, and torque loads that may occur during operation of the engine 28; e.g., a mounting linkage 160, 260 configuration like that diagrammatically shown in FIGS. 5 or 6.

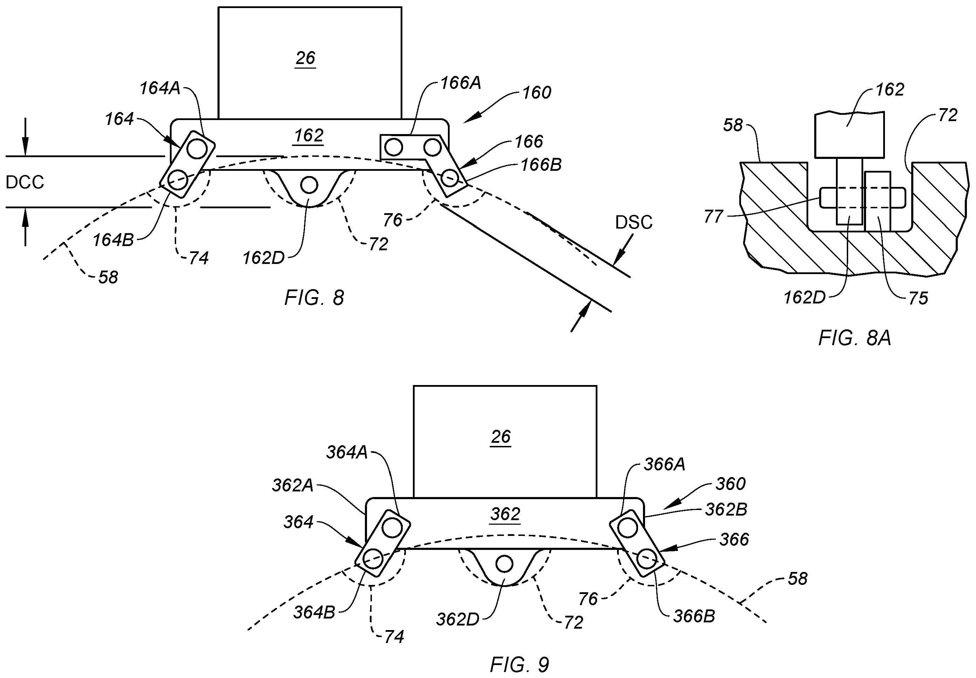

In some present invention embodiments, the fan case 58 may be configured to produce a decreased forward mount height using the mounting linkage 60. FIG. 8 diagrammatically illustrates the fan case 58, a mounting linkage 160 embodiment, and the pylon 26. FIG. 9 diagrammatically illustrates the fan case 58, a mounting linkage 360 embodiment, and the pylon 26. In the embodiments shown in FIGS. 8 and 9, the fan case 58 includes a center cavity 72 that is disposed in the outer perimeter of the fan case 58 and is configured to receive a portion of the central link 162, 362, a first cavity 74 that is disposed in the outer perimeter of the fan case 58 and is configured to receive a portion of the first lateral link 164, 364, and a second cavity 76 that is disposed in the outer perimeter of the fan case 58 and is configured to receive a portion of the second lateral link 166, 366. The outer radial perimeter of the fan case 58 and the cavities 72, 74, 76 are shown in dashed lines in FIGS. 8 and 9 to not obscure the mounting linkage 60 elements. FIG. 8 diagrammatically illustrates the mounting linkage 160 (i.e., central link 162, first lateral link 164, second lateral link 166) shown in FIG. 5 and described herein.

Within each cavity 72, 74, 76, the fan case 58 is configured to engage with the mounting linkage 160. Referring to FIG. 8A and using the center cavity 72 as an example, a lug 75 attached to the fan case 58 and a pin 77 may be used to couple the failsafe attachment flange 162D to the fan case 58. The configuration shown in FIG. 8A is for illustration purposes and is not intended to be limited. Referring back to FIG. 8, In similar fashion, the first cavity 74 may be configured to engage with the second end 164B of the first lateral link 164, and the second cavity 76 may be configured to engage with the second end 166B of the second lateral link 166. The depth of each cavity 72, 74, 76 may be varied to suit the application at hand. FIG. 8 illustrates the depth ("DCC") of the center cavity 72 and the depth ("DSC") of the second cavity 76. In some embodiments, the fan case 58 may be configured (e.g., with cavities) to engage with the mounting linkage 260 shown in FIG. 6. FIG. 9 diagrammatically illustrates the mounting linkage 360 shown in FIG. 7 with the center cavity 72 engaging with the failsafe attachment flange 362D of the central link 362, the first cavity 74 engaging with the second end 364B of the first lateral link 364, and the second cavity 76 receiving and engaging with the second end 366B of the second lateral link 366.

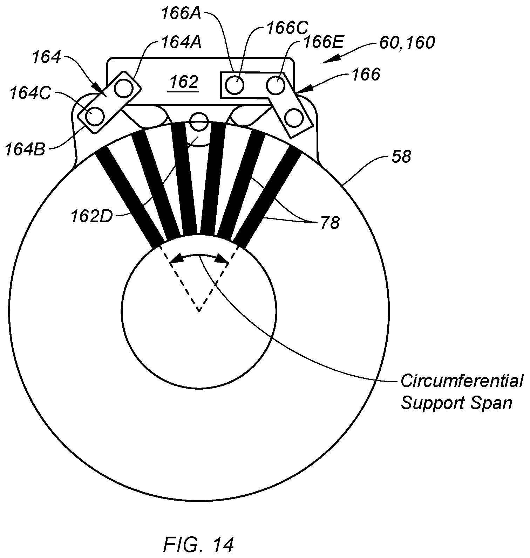

As detailed herein, the center, first, and second cavities 72, 74, 76 may extend radially inward from the outer perimeter of the fan case 58. In some instances, the portions of the fan case 58 that define the center, first, and second cavities 72, 74, 76 may extend into the annular space defined by the fan case 58; i.e., into the bypass air path 54 aft of the fan section 36. In other instances, one or more of the center, first, and second cavities 72, 74, 76 may extend radially inward and be aligned with a structure member (e.g., a strut) or a vane (e.g., a fan exit guide vane - "FEGV") and thereby avoid extending into the bypass air path 54. FIG. 14 diagrammatically illustrates how a plurality of guide vanes or load carrying struts 78 circumferentially spaced apart from one another over a circumferential span (e.g., up to about 150 degrees) may be used to structurally support a present invention mounting linkage 60, 160 embodiment engaging with a fan case 58 as described herein.

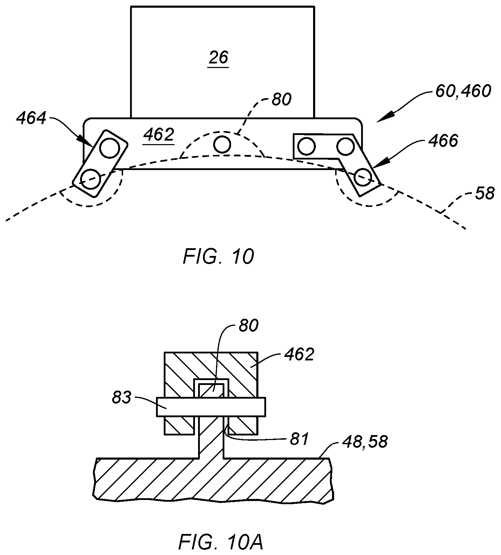

FIG. 10 diagrammatically illustrates a present invention mounting linkage 460 embodiment that may be used to connect the gas turbine engine 28 to the pylon 26 at the forward mount position 56A (e.g., at the fan case 58) or at the aft mount position 56B; e.g., at the TEC 48 - See FIG. 4. The mounting linkage 460 includes a central link 462, a first lateral link 464, and a second lateral link 466. The first and second lateral links 464, 466 may be configured like those shown in FIG. 5 and described herein. Referring to FIG. 10 and 10A, in this embodiment the central link 462 may be configured to engage with a flange 80 extending outward from the fan case 58 (or TEC 48); e.g., the central link 462 may include a slot 81 for receiving the flange 80 and an aperture for receiving a fastener 83 to secure the flange 80 within the slot. This mounting linkage 60 embodiment would avoid a center cavity 72 like that shown in FIGS. 8 and 9, and therefore the potential for a body that extends into the bypass air path 54. The engagement embodiment shown in FIGS. 10 and 10A are intended to illustrate an example regarding how the fan case 58 may be engaged with the linkage 60, 460. The present invention is not limited to this example.

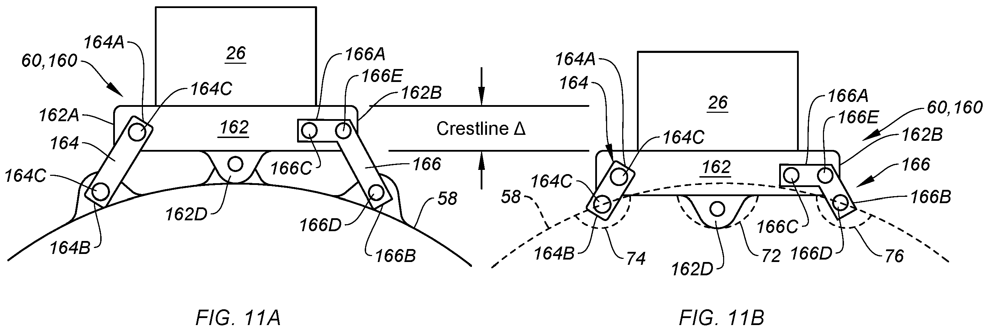

FIGS. 3 and 11A diagrammatically illustrate a first mounting linkage 60, 160 at the forward mount position 56A that extends between the fan case 58 and the pylon 26. In this embodiment, the mounting linkage 60, 160 is disposed completely externally to the fan case 58; e.g., the fan case 58 has a constant diameter outer perimeter, and the mounting linkage 60, 160 is attached (directly or indirectly) to the exterior surface of the fan case 58.

FIGS. 4 and 11B diagrammatically illustrate a second mounting linkage 60, 160 at the forward mount 56A position that extends between the fan case 58 and the pylon 26. In this embodiment, the mounting linkage 60, 160 and the fan case 58 are configured to produce a decreased forward mount height; e.g., the fan case 58 and the mounting linkage 60, 160 are configured in the same manner as shown in FIG. 8 and described herein with cavities 72, 74, 76 disposed in the outer perimeter of the fan case 58.

As can be seen in FIGS. 11A and 11B, there is a notable difference ("Crestline Δ") in the spacing between the pylon 26 and the engine fan case 58 (or the TEC 48). Decreasing the spacing between the pylon 26 and the engine fan case 58 or TEC 48 reduces the crestline of the nacelle 24 and the pylon 26. The reduction in the crestline is understood to eliminate crestlines that are associated with nacelle 24 aerodynamic drag.

In addition, the present invention includes using a mounting linkage 60 at the forward mount position 56A that accommodates vertical, lateral, and torque loads. In this manner, not only does the present invention mounting linkage 60 decrease the spacing between the pylon 26 and the engine fan case 58, but it is also understood to reduce the load requirements of the mounting linkage 60 disposed at the aft mount position. As a result, the mounting linkage 60 disposed at the aft mount position 56B may be reduced in size which helps to decrease the spacing between the pylon 26 and the TEC 48 and permits the use of a smaller pylon fairing, which in turn decreases aerolines and associated aerodynamic drag.

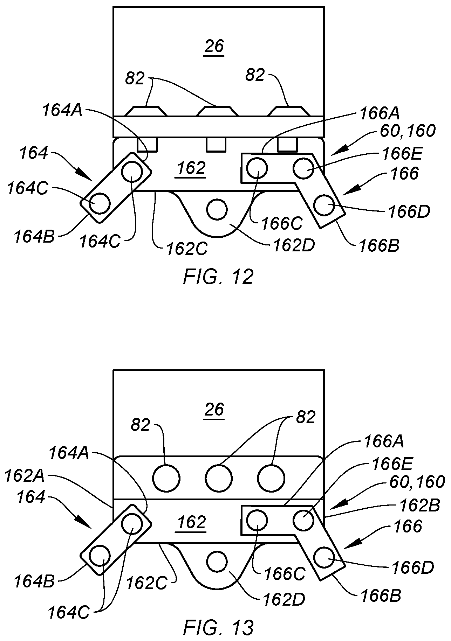

Present invention mounting linkage 60 embodiments may be attached to the pylon 26 in various different ways. FIG. 12 diagrammatically illustrates an example wherein fasteners 82 that are vertically oriented may be used to secure the mounting linkage 60, 160 (e.g., the central link 162) to the pylon 26. FIG. 13 diagrammatically illustrates an example wherein fasteners 82 that are axially oriented may be used to secure the mounting linkage 60, 160 (e.g., the central link 162) to the pylon 26. The present invention is not limited to any particular attachment configuration between the mounting linkage 60 and the pylon 26.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen."

The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An aircraft system, comprising:
a pylon (26);
a gas turbine engine (28) that comprises a fan section (36) having a fan case (58) and a turbine exhaust case, TEC (48), wherein the fan case (58) defines a portion of a bypass air path (54) and includes a linkage cavity (72, 74, 76) that extends radially inward;
a first mounting linkage (60) engaged with the fan case (58) and the pylon (26);
wherein the linkage cavity (72, 74, 76) is configured to receive a portion of the first mounting linkage (60); and
a second mounting linkage (60) engaged with the TEC (48) and the pylon (26).

2. The aircraft system of claim **1,** wherein the first mounting linkage (60) is configured to accommodate a first gravitational loading, a first lateral loading, and a first torque loading.

3. The aircraft system of claim 1 or 2, wherein the second mounting linkage (60) is configured to accommodate a second gravitational loading and a second lateral loading.

4. The aircraft system of any preceding claim, wherein the second mounting linkage (60) is not configured to accommodate torque resulting from an operation of the gas turbine engine (28).

5. The aircraft system of any preceding claim, wherein:
the first mounting linkage FML (60), includes a FML central link (162), a FML first lateral link (164), and a FML second lateral link (166);
the FML first lateral link (164) is attached to the FML central link (162) and to the fan case (58);
the FML second lateral link (166) is attached to the FML central link (162) and to the fan case (58); and
the FML central link (162) is attached to the fan case (58).

6. The aircraft system of claim 5, wherein:
the linkage cavity (72, 74, 76) includes a first cavity (74) and a second cavity (76);
the first cavity (74) extends radially inward from an outer perimeter of the fan case (58) and is configured to receive a portion of the FML first lateral link (164); and
the second cavity (76) extends radially inward from the outer perimeter of the fan case (58) and is configured to receive a portion of the FML second lateral link (166).

7. The aircraft system of claim 5 or 6, wherein the fan case (58) includes a central link flange (80) and the FML central link (162) is configured to engage with the central link flange (80) for attachment of the FML central link (162) to the fan case (58).

8. The aircraft system of any of claims 5 to 7, wherein the linkage cavity (72, 74, 76) includes a center cavity (72) that extends radially inward from the outer perimeter of the fan case (58) and is configured to receive a portion of the FML central link (162).

9. The aircraft system of any of claims 5 to 8, wherein:
the FML first lateral link (164) is pivotally attached to the FML central link (162) and pivotally attached to the fan case (58); and
the FML second lateral link (166) is non-rotationally attached to the central link (162) and pivotally attached to the fan case (58).

10. The aircraft system of any of claims 5 to 9, wherein:
the FML second lateral link (166) includes a first mounting aperture (166C) disposed at a first end (166A) of the FML second lateral link (166), a second mounting aperture (166D) disposed at a second end (166B) of the FML second lateral link (166), and a third mounting aperture (166E);
the first mounting aperture (166C), the second mounting aperture (166D), and the third mounting aperture (166E) are arranged such that an included obtuse angle is disposed between a first line (68) and a second line (70); and
the first line (68) intersects a center of the first mounting aperture (166C) and a center of the third mounting aperture (166E), and the second line (70) intersects a center of the second mounting aperture (166D) and the center of the third mounting aperture (166E).

11. The aircraft system of any of claims 5 to 9, wherein:
the FML second lateral link (266) includes a first mounting aperture (266C) disposed at a first end (266A) of the FML second lateral link (266), a second mounting aperture (266D) disposed at a second end (266B) of the FML second lateral link (266), and a third mounting aperture (266E);
the first mounting aperture (266C), the second mounting aperture (266D), and the third mounting aperture (266E) are arranged such that an included acute angle is disposed between a first line (68) and a second line (70); and
the first line (68) intersects a center of the first mounting aperture (266C) and a center of the third mounting aperture (266E), and the second line (70) intersects a center of the second mounting aperture (266D) and the center of the third mounting aperture (266E).

12. The aircraft system of any preceding claim, wherein:
the second mounting linkage, SML (60), includes a SML central link (162), a SML first lateral link (164), and a SML second lateral link (166); and
the SML first lateral link (164) is attached to the SML central link (162) and to the TEC (48), and the SML second lateral link (166) is attached to the SML central link (162) and to the TEC (48).

13. The aircraft system of claim 12, wherein:
the SML first lateral link (164) is pivotally attached to the SML central link (162) and pivotally attached to the TEC (48); and
the SML second lateral link (166) is pivotally attached to the SML central link (162) and pivotally attached to the TEC (48).

14. An aircraft (20), comprising the aircraft system of any preceding claim, wherein:
the gas turbine engine (28) comprises a compressor section (38), a combustor (40), a turbine section (42); and
the fan case (58) is disposed radially outside of the fan section (36).
